# FASCICULE DE BREVET EUROPEEN

(11) **EP 3 028 425 B1**
(45) Date de publication et mention de la délivrance du brevet: **22.04.2020**
(21) Numéro de dépôt: 14747066.0
(22) Date de dépôt: 30.06.2014
(51) Int. Cl.: H04L 25/08, B60R 16/02

(54) **DISPOSITIF DE COMMUNICATION ET VÉHICULE AUTOMOBILE COMPORTANT UN TEL DISPOSITIF**
VORRICHTUNG ZUR KOMMUNIKATION SOWIE FAHRZEUG, WELCHES EINE SOLCHE VORRICHTUNG ENTHÄLT
APPARATUS FOR COMMUNICATION AND VEHICLE COMPRISING SUCH AN APPARATUS

(30) Priorité: 31.07.2013 FR 1357583
(43) Date de publication de la demande: 08.06.2016
(73) Titulaire: Renault S.A.S., 92100 Boulogne-Billancourt (FR)
(72) Inventeur: BIDAULT, Vincent, 92150 Suresnes (FR); CAMPOY-MARTINEZ, Sergio, 92130 Issy Les Moulineaux (FR); VILLANUEVA, Josetxo, 75015 Paris (FR)
(86) Numéro de dépôt international: PCT/FR2014/051662
(87) Numéro de publication internationale: WO 2015/015075

(56) Documents cités:
- EP-A1- 1 968 246
- EP-A1- 2 495 133
- "Handbuch Kraftfahrzeugelektronik, Bussysteme, Vernetzungen,verteilte Systeme ED - Wallentowitz H; Reif K", 1 septembre 2006 (2006-09-01), HANDBUCH KRAFTFAHRZEUGELEKTRONIK : GRUNDLAGEN, KOMPONENTEN, SYSTEME, ANWENDUNGEN ; MIT ZAHLREICHEN TABELLEN, FRIEDR. VIEWEG & SOHN VERLAG, WIESBADEN, PAGE(S) 196 - 228, XP002694874, ISBN: 978-3-528-03971-4 page 212, colonne de gauche - page 215
- "P1394b Draft Standard for a High Performance Serial Bus (Supplement) ; p1394b1-11", IEEE DRAFT; P1394B1-11, IEEE-SA, PISCATAWAY, NJ USA, vol. 1394, 2 juillet 2003 (2003-07-02), pages 1-386, XP017756302,
- "Universal Serial Bus Specification Revision 1.1", UNIVERSAL SERIAL BUS SPECIFICATION, XX, XX, 23 septembre 1998 (1998-09-23), pages II-XVI1, XP002989938,

## Description

### DOMAINE TECHNIQUE AUQUEL SE RAPPORTE L'INVENTION

La présente invention concerne de manière générale le domaine de la communication entre unités de commande électroniques.

Elle concerne plus particulièrement un dispositif de communication selon la revendication 1.

L'invention concerne également un véhicule automobile comportant un tel dispositif de communication.

### ARRIERE-PLAN TECHNOLOGIQUE

Un véhicule automobile comprend de nombreux capteurs (détecteur de pluie, capteur de luminosité, capteur de pression, etc...) et de nombreux actionneurs (moteur d'essuie-glace, injecteurs de carburant, etc...).

Ces capteurs et actionneurs sont, de manière générale, commandés par des unités de commande électroniques (« *Electronic Control Unit»* en anglais), c'est-à-dire des calculateurs, qui communiquent les uns avec les autres.

Par exemple, un détecteur de pluie comportera une première unité de commande électronique qui sera reliée à une deuxième unité de commande électronique d'un moteur d'essuie-glace.

Un dispositif de communication tel que défini en introduction permet alors aux unités de commande électroniques de communiquer entre elles.

On connaît en particulier un dispositif de communication dont les unités de commande électroniques échangent des informations *via* un seul et unique fil de communication, en utilisant un signal de tension élaboré selon un protocole de communication de type LIN (« *Local Interconnect Network »* en anglais), qui est référencé à une première et deuxième tension de référence.

Le document EP2495133A1 divulgue un faisceau de câblage pour connecter à une unité de contrôle électronique une pluralité d'appareils électroniques standards et optionnels. Une liaison multiplexée, par exemple de type LIN, est prévue pour faire communiquer l'unité de contrôle électronique avec les appareils électroniques optionnels. Le faisceau de câblage comporte des fils d'alimentation des appareils électroniques.

Le document ISBN 978-3-528-03971-4 divulgue en page 214 deux niveaux de tension de référence utilisés sur un bus de type LIN, l'un proche de la tension d'alimentation et l'autre proche de la tension de masse.

Il a été constaté, lors de tests de compatibilité électromagnétique (CEM), qu'un tel dispositif de communication à un seul fil de communication pouvait être sensible aux perturbations électromagnétiques émises dans l'environnement du véhicule automobile, par exemple des perturbations liées au fonctionnement de différents organes du véhicule automobile (moteur, alternateur, actuateurs) ou aux ondes radio reçues ou émises à proximité du véhicule automobile (radiodiffusion FM, ondes GSM ou Wi-Fi, etc...).

Ces perturbations électromagnétiques conduisent, dans certaines bandes de fréquence, à un brouillage du signal de tension.

Ainsi, dans un environnement perturbé, il y a un risque de rupture temporaire de communication et de perte d'information.

### OBJET DE L'INVENTION

Afin de remédier à l'inconvénient précité de l'état de la technique, la présente invention propose un dispositif de communication qui présente une résistance accrue aux perturbations électromagnétiques.

Plus particulièrement, on propose selon l'invention un dispositif de communication, tel que défini en introduction, comportant en outre :
- deux fils de référence dont l'un relie lesdites premières bornes électriques et dont l'autre relie lesdites deuxièmes bornes électriques, et
- un moyen de guidage qui force lesdits fils de référence à cheminer avec ledit fil de communication entre lesdites deux unités de commande électroniques.

Dans un environnement perturbé par des ondes électromagnétiques, lors de la transmission du signal de tension, les tensions de référence et la tension de signal sont perturbées.

Grâce au raccordement des premières bornes électriques et des deuxièmes bornes électriques par les deux fils de référence, et grâce au moyen de guidage, on s'assure que ces signaux sont perturbés de la même manière.

En effet, un signal de tension est généralement élaboré de telle manière qu'il varie par paliers entre un premier niveau de référence (égal à une tension de signal fixée par la tension de référence commune aux premières bornes électriques), et un deuxième niveau de référence (égal à une tension de signal fixée par la tension de référence commune aux deuxièmes bornes électriques).

Grâce au cheminement proche des fils de référence et du fil de communication, il est alors possible de diminuer les effets de mode commun lors de la transmission de ce signal de tension sur le fil de communication reliant les deux unités de commande électroniques.

L'invention proposée entraîne de faibles modifications dans les dispositifs de communication actuels. Elle apporte une amélioration considérable de l'immunité électromagnétique simplement en faisant en sorte que le fil de communication soit au plus près des deux fils de référence.

D'autres caractéristiques non limitatives et avantageuses de dispositif de communication conforme à l'invention sont définies dans les revendications dépendantes.

L'invention propose également un véhicule automobile qui comporte un dispositif de communication conforme à l'invention.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un dispositif de communication selon un premier mode de réalisation de l'invention ;
- la figure 2 est un exemple de signal de tension élaboré selon un protocole de communication de type LIN et transmis par le dispositif de communication de la figure 1 ;
- la figure 3 est une vue en coupe d'une gaine électrique logeant le fil de communication, le fil de batterie et le fil de masse du dispositif de communication de la figure 1 ;
- la figure 4 est une vue schématique d'un dispositif de communication selon un deuxième mode de réalisation de l'invention ;
- la figure 5 est une vue schématique du dispositif de communication selon une variante du deuxième mode de réalisation de l'invention.

En préambule, on notera que les éléments identiques ou similaires des différents modes de réalisation représentés sur les différentes figures seront référencés par les mêmes signes de référence et ne seront pas décrits à chaque fois.

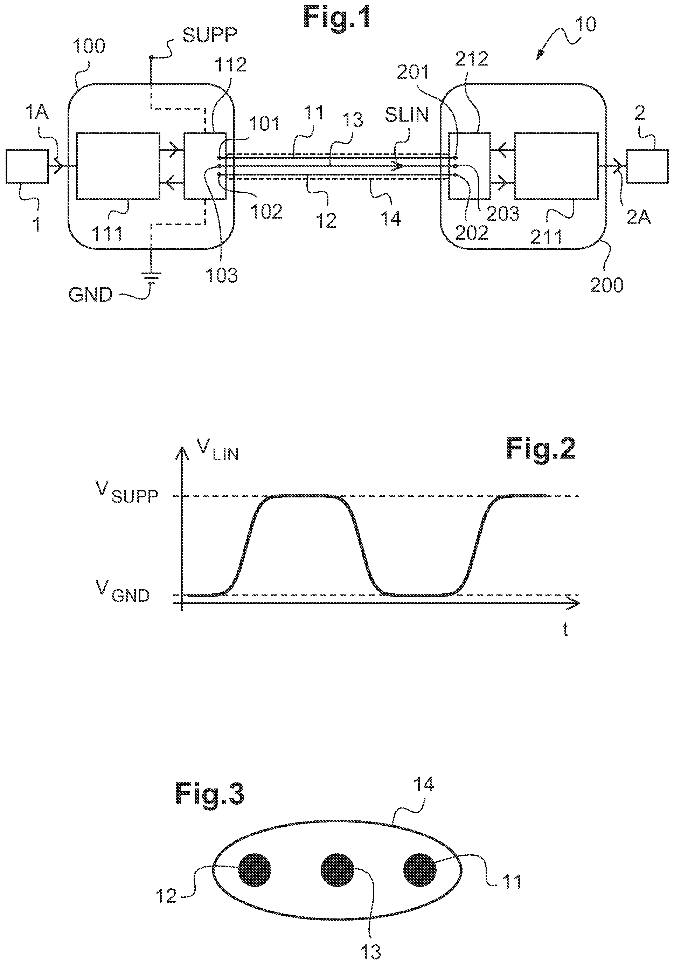

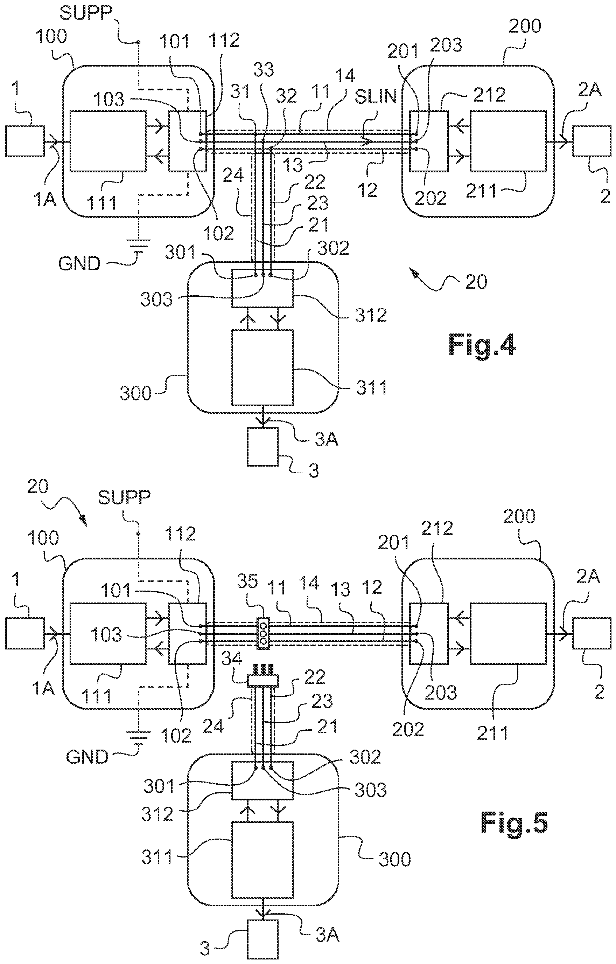

On a représenté sur les figures 1 et 4 deux modes de réalisation particuliers d'un dispositif de communication 10 ; 20 destiné à équiper par exemple un véhicule automobile (non représenté).

Le dispositif de communication 10 ; 20 est ici conçu de manière à communiquer selon un protocole de communication de type LIN, ci-après désigné par l'appellation « protocole LIN ». Le protocole LIN est en cours de normalisation au sein de la norme ISO/CD 17987.

Grâce à son interface simple et à son implémentation au moyen de composants facilement disponibles et peu coûteux, le protocole LIN présente un avantage économique dans le domaine automobile par rapport à d'autres protocoles de communication multiplexée, par exemple le protocole de communication de type CAN (« *Controller Area Network »* en anglais), défini par la norme internationale ISO 11898.

Le protocole LIN est utilisé dans les véhicules automobiles pour des besoins de communication à bas débit, typiquement inférieur à environ vingt kilobits par seconde.

Comme représenté sur les figure 1 et 4, le dispositif de communication 10 ; 20 comporte une première et une deuxième unité de commande électronique 100, 200, ci-après dénommées par leur abréviation UCE.

Dans les différents modes de réalisation de l'invention décrits ici, la première UCE 100 commande un détecteur de pluie 1 du véhicule automobile et la deuxième UCE 200 commande un moteur d'essuie-glace 2.

Dans le deuxième mode de réalisation représenté sur la figure 4, et dans sa variante représentée sur la figure 5, le dispositif de communication 20 comporte en outre une troisième unité de commande électronique 300 commandant un autre moteur d'essuie-glace 3.

Dans les différents exemples décrits par la suite en détail, et afin de bien comprendre le fonctionnement du dispositif de communication 10 ; 20 et les avantages qui en découlent, on considérera que la première UCE 100 est ici en mode « émetteur » et que les deuxième et troisième UCE 200, 300 sont, quant à elles, en mode « récepteur ».

On entend par là que la première UCE 100 reçoit, de la part du détecteur de pluie 1, un signal de détection 1A, puis traite ce signal de détection 1A et enfin communique le résultat de ce traitement aux deuxième et troisième UCE 200, 300 qui commandent alors respectivement leur moteur d'essuie-glace 2, 3 *via* un signal de commande 2A, 3A.

Dans le premier mode de réalisation de l'invention représenté sur la figure 1 qui ne comprend que deux unités de commande électroniques 100, 200, le dispositif de communication 10 est principalement décrit et représenté pour illustrer de manière simple le fonctionnement de l'invention.

Afin d'être alimentée électriquement, la première UCE 100 comporte (voir figure 1) une borne d'alimentation SUPP et une borne de masse GND.

D'un côté, la borne d'alimentation SUPP est reliée à un boîtier de distribution électrique (non représenté) situé dans l'habitacle du véhicule automobile et délivrant une tension d'alimentation V_{SUPP} en fonction de la tension de batterie V_{BATT}. Cette tension d'alimentation V_{SUPP} est ici égale à 12 volts.

De l'autre côté, la borne de masse GND est reliée à un goujon de masse (non représenté) du véhicule automobile, situé au plus près de la première UCE 100. Ainsi branchée, la borne de masse GND est soumise à une tension de masse V_{GND} nulle, égale à 0 volt.

Les première et deuxième UCE 100, 200 comportent chacune une première borne électrique 101, 201, une seconde borne électrique 102, 202, et une borne de communication 103, 203.

Ici, la première borne électrique 101 de la première UCE 100 est directement connectée à la borne d'alimentation SUPP et la deuxième borne électrique 102 de la première UCE 100 est directement connectée à la borne de masse GND si bien que ces bornes électriques 101, 102 présentent une différence de potentiels égale à douze volts.

La première UCE 100 comporte par ailleurs un moyen d'élaboration 111 d'un signal de tension SLIN référencé auxdites tensions de référence V_{SUPP}, V_{GND}. Ce moyen d'élaboration 111 est alors conçu pour émettre ce signal de tension SLIN vers sa borne de transmission 103.

En correspondance, la deuxième UCE 200 comporte un moyen de traitement 211 du signal de tension SLIN reçu sur sa borne de communication 203, *via* un fil de communication 13.

Un exemple de signal de tension SLIN élaboré selon un protocole de communication de type LIN est illustré sur la figure 2.

Plus précisément, on a représenté sur la figure 2 un exemple de variation de la tension V_{LIN} du signal de tension SLIN en fonction du temps t.

Selon le protocole LIN, ce signal de tension SLIN oscille entre deux niveaux de tension différents :
- un niveau bas, appelé également niveau « dominant », qui correspond à un premier état du signal de tension SLIN où la tension de signal V_{LIN} est égale à la tension de masse V_{GND}, et
- un niveau haut, appelé également niveau « récessif », qui correspond à un deuxième état du signal de tension SLIN où la tension de signal V_{LIN} est égale à la tension d'alimentation V_{SUPP}.

On dit alors du signal de tension SLIN qu'il est référencé aux tensions de masse V_{GND} et d'alimentation V_{SUPP}.

Selon une caractéristique particulièrement avantageuse de l'invention, les premières bornes électriques 101, 201 des deux UCE 100, 200 sont reliées entre elles par un premier fil de référence 11, les deuxièmes bornes électriques 102, 202 des deux UCE 100, 200 sont reliées entre elles par un deuxième fil de référence 12, et ces deux fils de référence 11, 12 sont guidés par un moyen de guidage 14 pour cheminer avec le fil de communication 13 entre les deux UCE 100, 200.

Lorsque des ondes électromagnétiques perturbent la transmission du signal de tension SLIN le long du fil de communication 13 entre la première UCE 100 et la deuxième UCE 200, il s'ensuit des variations dans la tension de signal V_{LIN} et un brouillage du signal de tension SLIN.

Les tensions de référence V_{SUPP}, V_{GND} portées par les deux fils de référence 11, 12 seront alors affectées de la même manière lorsqu'ils sont soumis aux mêmes ondes électromagnétiques, ce qui est ici le cas puisque les deux fils de référence 11, 12 sont situés près du fil de communication 13.

Alors, puisque le moyen d'élaboration 111 élabore le signal de tension SLIN en référence aux tensions de référence V_{SUPP}, V_{GND}, le moyen de traitement 211 pourra traiter le signal de tension SLIN reçu (et perturbé) en référence aux tensions de référence V_{SUPP}, V_{GND} reçues (et elles aussi perturbées). Il s'ensuit alors un traitement efficace du signal de tension SLIN, même lorsque ce dernier a été fortement perturbé.

Grâce au moyen de guidage 14, les fils de référence 11, 12 cheminent ensemble avec le fil de communication 13 entre les deux UCE 100, 200.

On entend par là que les fils de référence 11, 12 et le fil de communication 13 restent proches les uns des autres le long du chemin qui les relient de la première UCE 100 à la deuxième UCE 200.

Bien que sur la figure 1, le chemin de fils qui relient la première UCE 100 à la deuxième UCE 200 soit un chemin rectiligne, il est possible, en fonction des contraintes de connexion des deux UCE 100, 200 dans le véhicule automobile, que ce chemin soit courbe, ou présente plusieurs coudes.

Le moyen de guidage comprend ici une gaine de cheminement 14 de câbles logeant ensemble (voir figure 3) le premier fil de référence 11, le deuxième fil de référence 12, et le fil de communication 13.

Cette gaine de cheminement 14 de câbles ne nécessite pas de blindage particulier destiné à accroître sa compatibilité électromagnétique.

En variante, la gaine de cheminement de câbles peut éventuellement comprendre un blindage électromagnétique formé d'une tresse ou d'un drain électriquement relié à la borne de masse d'une ou plusieurs unités de commande électroniques.

De manière préférée, la gaine de cheminement 14 de câbles force les deux fils de référence 11, 12 et de communication 13 à cheminer de manière sensiblement parallèle.

On entend par là que les deux fils de référence 11, 12 conservent, chacun, une distance de séparation sensiblement constante par rapport au fil de communication 13 et que leurs tangentes sont parallèles en toute section transverse de la gaine de cheminement 14 de câbles.

De cette façon, on s'assure que les fils de référence 11, 12 subissent les mêmes perturbations électromagnétiques.

Plus précisément ici, les moyens d'élaboration et de traitement des première et deuxième UCE 100, 200 comportent un micro-contrôleur 111, 211 numérique (voir figure 1) qui comprend, entre autres, un processeur, une mémoire vive, une mémoire morte, et différentes interfaces d'entrée ou de sortie pour recevoir ou transmettre des signaux en provenance du détecteur de pluie 1 (cas du micro-contrôleur 111) ou en direction du moteur d'essuie-glace 2 (cas du micro-contrôleur 211).

Les moyens d'élaboration et de traitement des première et deuxième UCE 100, 200 comportent par ailleurs des convertisseurs numériques/analogiques 112 (cas de la première UCE 100) ou analogiques/numériques 212 (cas de la deuxième UCE 200) pour convertir les signaux numériques traités par les micro-contrôleurs 111, 211 en un signal de tension SLIN analogique, ou *vice versa.*

Dans la configuration de la figure 1, le signal de détection 1A délivré par le détecteur de pluie 1 et indiquant, par exemple, la présence de gouttes de pluie sur le pare-brise du véhicule automobile, est transmis au micro-contrôleur 111 de la première UCE 100 qui traite ce signal de détection 1A. En fonction du résultat de ce traitement, le micro-contrôleur 111 génère un signal LIN numérique, élaboré selon le protocole LIN, puis les convertisseurs numériques / analogiques 112 transmettent ce signal de tension SLIN sous forme analogique, *via* le fil de communication 13, à la deuxième UCE 200. Le signal de tension SLIN analogique est alors transformé en un signal LIN numérique puis est traité par le micro-contrôleur 211 qui génère le signal de commande 2A correspondant pour commander le moteur d'essuie-glace 2.

Dans un mode de réalisation alternatif, la deuxième UCE du dispositif de communication peut également comprendre une borne d'alimentation alimentée à une autre tension d'alimentation et une borne de masse alimentée à une autre tension de masse.

Dans ce mode, les composants électroniques de la deuxième UCE seront alors alimentés, non pas *via* la première UCE, mais directement par la borne d'alimentation.

Dans ce mode encore, la deuxième UCE pourra fonctionner en « émetteur », puisque ces deux tensions d'alimentation et de masse pourront alors servir de tensions de référence pour les première et deuxième bornes électriques de la deuxième UCE.

Dans ce mode toujours, il sera prévu, dans chaque UCE, des moyens de déconnexion adaptés à déconnecter la première borne électrique de la tension d'alimentation V_{SUPP} et la deuxième borne électrique de la tension de masse V_{GND}.

Ainsi, lors de l'émission d'un signal de tension SLIN depuis la deuxième UCE vers la première UCE, les moyens de déconnexion de la deuxième UCE seront commandés pour connecter les première et deuxième bornes électriques aux tensions d'alimentation V_{SUPP} et de masse V_{GND}. Les moyens de déconnexion de la première UCE seront quant à eux commandés pour déconnecter la première borne électrique de la tension d'alimentation V_{SUPP} et la deuxième borne électrique de la tension de masse V_{GND}.

Dans le deuxième mode de réalisation représenté sur la figure 4 et dans une de ses variantes représentée sur la figure 5, la troisième UCE 300 du dispositif de communication 20 comprend comme les première et deuxième UCE 100, 200 :
- une première borne électrique 301 branchée au premier fil de référence 11,
- une seconde borne électrique 302 branchée au deuxième fil de référence 12,

- des moyens de traitement 311 (sous la forme d'un micro-contrôleur 311) du signal de tension SLIN selon le protocole LIN, référencé aux première et deuxième tensions de référence V_{SUPP}, V_{GND}, et
- une borne de communication 303 branchée au fil de communication 13 reliant la première et la deuxième UCE 100, 200, par un autre fil de communication 23 pour recevoir le signal de tension SLIN.

Afin d'améliorer l'immunité électromagnétique du dispositif de communication 20, la première borne électrique 301 est connectée au premier fil de référence 11 et la deuxième borne électrique 302 est connectée au deuxième fil de référence 12 *via* deux autres fils de référence 21, 22 cheminant avec l'autre fil de communication 23.

Il est à cet effet prévu un autre moyen de guidage, comprenant ici une autre gaine de cheminement 24 de câbles, qui force ces autres fils de référence 21, 22 à cheminer ensemble avec l'autre fil de communication 23.

Dans le deuxième mode de réalisation représenté sur la figure 4, les connexions des deux autres fils de référence 21, 22 avec les deux fils de référence 11, 12 et la connexion de l'autre fil de communication 23 avec le fil de communication 13 sont réalisées par trois épissures 31, 32, 33.

La troisième épissure 33 entre les deux fils de communication 13, 23 permet notamment au signal de tension SLIN d'être transmis entre la troisième UCE 300 et les deux autres UCE 100, 200.

Dans la variante de ce second mode de réalisation représentée sur la figure 5, les connexions des deux autres fils de référence 21, 22 avec les deux fils de référence 11, 12 et la connexion de l'autre fil de communication 23 avec le fil de communication 13 sont réalisées par des connecteurs mâle 34 et femelle 35 à trois broches.

Les trois broches du connecteur femelle 35 sont ici branchées sur les deux fils de référence 11, 12 et sur le fil de communication 13 reliant la première UCE 100 à la deuxième UCE 200.

De la même manière, les trois broches du connecteur mâle 34 sont branchées sur les deux autres fils de référence 21, 22 et sur l'autre fil de communication 23 branchés sur les bornes électriques 301, 302 et sur la borne de communication 303 de la troisième UCE 300.

De préférence, les connecteurs mâle 34 et femelle 35 comprennent un détrompeur (non représenté) permettant d'éviter les erreurs de connexion électrique, par exemple une connexion de l'autre premier fil de référence 21 sur le deuxième fil de référence 12.

Dans d'autres modes de réalisation de l'invention où les moyens d'élaboration et de traitement sont prévus pour élaborer un signal de tension selon un protocole de communication de type LIN, le dispositif de communication peut comporter jusqu'à seize unités de commande électroniques.

En particulier, on pourrait prévoir que le signal de tension soit élaboré selon un protocole de communication autre que le protocole LIN utilisant un signal de tension non différentiel. Il pourrait ainsi s'agir d'un signal à modulation de fréquence, dont la valeur moyenne et l'amplitude serviraient de valeurs de référence.

On pourrait aussi prévoir que les bornes électriques des unités de commande électroniques soient connectées indirectement aux bornes d'alimentation et de masse, *via* par exemple un circuit abaisseur de tension.

## Revendications

1. Dispositif de communication (10 ; 20) comportant deux unités de commande électroniques (100, 200) qui comprennent chacune une première et une deuxième borne électrique (101, 102, 201, 202), et une borne de communication (103, 203) branchée à la borne de communication (103, 203) de l'autre unité de commande électronique (100, 200) par un fil de communication (13), dans lequel :
- une première desdites deux unités de commande électroniques (100) comporte une borne d'alimentation (SUPP) alimentée à une première tension d'alimentation et reliée à un boîtier de distribution électrique pour présenter sur sa première borne électrique (101) un premier niveau de tension de référence (V_{SUPP}), une borne de masse (GND) alimentée à une première tension de masse et reliée à un goujon de masse au plus près de la première unité de la première unité de commande électronique (100) pour présenter sur sa deuxième borne électrique (102) un deuxième niveau de tension de référence (V_{GND}), et un moyen d'élaboration (111) adapté à émettre sur sa borne de communication (103) un signal de tension (SLIN) référencé auxdites tensions de référence (V_{SUPP}, V_{GND}), et
- une deuxième desdites deux unités de commande électroniques (200) comprend un moyen de traitement (211) dudit signal de tension (SLIN) reçu sur sa borne de communication (203) *via* ledit fil de communication (13),
- deux fils de référence (11, 12) reliant, d'une part, lesdites premières bornes électriques (101, 201) entre elles, et, d'autre part, lesdites deuxièmes bornes électriques (102, 202) entre elles, et
- un moyen de guidage (14) qui force lesdits fils de référence (11, 12) à cheminer avec ledit fil de communication (13) entre lesdites deux unités de commande électroniques (100, 200),
**caractérisé en ce que** :
- la deuxième unité de commande électronique (200) comprend une borne d'alimentation alimentée à une autre tension d'alimentation et une borne de masse alimentée à une autre tension de masse, et **en ce que**
- la première unité de commande électronique (100) comprend des moyens de déconnexion adaptés à déconnecter sa première borne électrique de la première tension d'alimentation et sa deuxième borne électrique de la première tension de masse, lors de l'émission d'un signal de tension (SLIN) depuis la deuxième unité de commande électronique (200) vers la première unité de commande électronique (100), et **en ce que**
- la deuxième unité de commande électronique (200) comprend des moyens de déconnexion adaptés à connecter sa première borne électrique à l'autre tension d'alimentation et sa deuxième borne électrique à l'autre tension de masse, lors de l'émission d'un signal de tension (SLIN) depuis la deuxième unité de commande électronique (200) vers la première unité de commande électronique (100).

2. Dispositif de communication (10 ; 20) selon la revendication précédente, dans lequel ledit moyen de guidage (14) force lesdits fils de référence (11, 12) et de communication (13) à cheminer de manière sensiblement parallèle.

3. Dispositif de communication (10 ; 20) selon l'une des revendications précédentes, dans lequel ledit moyen de guidage (14) comprend une gaine de cheminement de câbles logeant lesdits fils de référence (11, 12) et de communication (13).

4. Dispositif de communication (10 ; 20) selon l'une des revendications précédentes, dans lequel ledit moyen d'élaboration (111) est prévu pour élaborer ledit signal de tension (SLIN) selon un protocole de communication de type LIN.

5. Dispositif de communication (20) selon l'une des revendications précédentes, comportant en outre :
- une autre unité de commande électronique (300) qui comprend une première et une deuxième borne électrique (301, 302), un moyen de traitement (311) dudit signal de tension (SLIN), et une borne de communication (303) branchée audit fil de communication (13) par un autre fil de communication (23) pour recevoir ledit signal de tension (SLIN),
- deux autres fils de référence (21, 22) connectant respectivement lesdites première et deuxième bornes électriques (301, 302) de ladite autre unité de commande électronique (300) auxdits deux fils de référence (11, 12), et
- un autre moyen de guidage (24) qui force lesdits deux autres fils de référence (21, 22) à cheminer avec ledit autre fil de communication (23).

6. Dispositif de communication (20) selon la revendication précédente, dans lequel les connexions desdits deux autres fils de référence (21, 22) avec lesdits deux fils de référence (11, 12) et la connexion dudit autre fil de communication (23) avec ledit fil de communication (13) sont réalisées par trois épissures (31, 32, 33).

7. Dispositif de communication (20) selon la revendication 5, dans lequel les connexions desdits deux autres fils de référence (21, 22) avec lesdits deux fils de référence (11, 12) et la connexion dudit autre fil de communication (23) avec ledit fil de communication (13) sont réalisées par des connecteurs mâle (34) et femelle (35) à trois broches.

8. Dispositif de communication selon l'une des revendications 5 à 7, dans lequel il est prévu entre deux et quatorze autres unités de commande électroniques.

9. Véhicule automobile **caractérisé en ce qu'**il comporte un dispositif de communication (10 ; 20) selon l'une des revendications 1 à 8.

10. Véhicule automobile selon la revendication 9, comprenant au moins une unité de commande électronique (100) avec une première borne électrique (101) reliée à un boîtier de distribution électrique situé dans l'habitacle du véhicule automobile et délivrant une tension d'alimentation (V_{SUPP}) en fonction d'une tension de batterie (V_{BATT}) à ladite unité électronique, **caractérisé en ce qu'**il comporte un goujon de masse situé au plus près de ladite unité de commande électronique (100) et auquel est reliée une deuxième borne (102) de ladite unité de commande électronique.

## Patentansprüche

1. Kommunikationsvorrichtung (10; 20), die zwei elektronische Steuereinheiten (100, 200) aufweist, die je einen ersten und einen zweiten elektrischen Anschluss (101, 102, 201, 202) und einen Kommunikationsanschluss (103, 203) enthalten, der an den Kommunikationsanschluss (103, 203) der anderen elektronischen Steuereinheit (100, 200) durch einen Kommunikationsdraht (13) angeschlossen ist, wobei:
- eine erste der zwei elektronischen Steuereinheiten (100) einen Versorgungsanschluss (SUPP), der mit einer ersten Versorgungsspannung versorgt wird und mit einem elektrischen Verteilerkasten verbunden ist, um an ihrem ersten elektrischen Anschluss (101) einen ersten Referenzspannungspegel (V_{SUPP}) aufzuweisen, einen Masseanschluss (GND), der mit einer ersten Massespannung versorgt wird und mit einem Massebolzen so nahe wie möglich der ersten Einheit der der ersten Einheit der ersten elektronischen Steuereinheit (100) verbunden ist, um an ihrem zweiten elektrischen Anschluss (102) einen zweiten Referenzspannungspegel (V_{GND}) aufzuweisen, und eine Ausarbeitungseinrichtung (111) aufweist, die geeignet ist, an ihrem Kommunikationsanschluss (103) ein auf die Referenzspannungen (V_{SUPP}, V_{GND}) referenziertes Spannungssignal (SLIN) zu senden, und
- eine zweite der zwei elektronischen Steuereinheiten (200) eine Verarbeitungseinrichtung (211) des Spannungssignals (SLIN) enthält, das an ihrem Kommunikationsanschluss (203) über den Kommunikationsdraht (13) empfangen wurde,
- zwei Referenzdrähte (11, 12), die einerseits die ersten elektrischen Anschlüsse (101, 201) miteinander und andererseits die zweiten elektrischen Anschlüsse (102, 202) miteinander verbinden, und
- eine Führungseinrichtung (14), die die Referenzdrähte (11, 12) zwingt, mit dem Kommunikationsdraht (13) zwischen den zwei elektronischen Steuereinheiten (100, 200) zu verlaufen,
**dadurch gekennzeichnet, dass**:
- die zweite elektronische Steuereinheit (200) einen mit einer anderen Versorgungsspannung versorgten Versorgungsanschluss und einen mit einer anderen Massespannung versorgten Masseanschluss enthält, und dass
- die erste elektronische Steuereinheit (100) Trenneinrichtungen enthält, die geeignet sind, beim Senden eines Spannungssignals (SLIN) von der zweiten elektronischen Steuereinheit (200) zur ersten elektronischen Steuereinheit (100) ihren ersten elektrischen Anschluss von der ersten Versorgungsspannung und ihren zweiten elektrischen Anschluss von der ersten Massespannung zu trennen, und dass
- die zweite elektronische Steuereinheit (200) Trenneinrichtungen enthält, die geeignet sind, beim Senden eines Spannungssignals (SLIN) von der zweiten elektronischen Steuereinheit (200) zur ersten elektronischen Steuereinheit (100) ihren ersten elektrischen Anschluss mit der anderen Versorgungsspannung und ihren zweiten elektrischen Anschluss mit der anderen Massespannung zu verbinden.

2. Kommunikationsvorrichtung (10; 20) nach dem vorhergehenden Anspruch, wobei die Führungseinrichtung (14) die Referenz- (11, 12) und Kommunikationsdrähte (13) zwingt, im Wesentlichen parallel zu verlaufen.

3. Kommunikationsvorrichtung (10; 20) nach einem der vorhergehenden Ansprüche, wobei die Führungseinrichtung (14) eine Kabelverlegungshülle enthält, in die der Referenz- (11, 12) und Kommunikationsdrähte (13) untergebracht sind.

4. Kommunikationsvorrichtung (10; 20) nach einem der vorhergehenden Ansprüche, wobei die Ausarbeitungseinrichtung (111) vorgesehen ist, um das Spannungssignal (SLIN) gemäß einem Kommunikationsprotokoll des Typs LIN auszuarbeiten.

5. Kommunikationsvorrichtung (20) nach einem der vorhergehenden Ansprüche, die außerdem aufweist:
- eine weitere elektronische Steuereinheit (300), die einen ersten und einen zweiten elektrischen Anschluss (301, 302), eine Verarbeitungseinrichtung (311) des Spannungssignals (SLIN) und einen Kommunikationsanschluss (303) enthält, der an den Kommunikationsdraht (13) durch einen weiteren Kommunikationsdraht (23) angeschlossen ist, um das Spannungssignal (SLIN) zu empfangen,
- zwei weitere Referenzdrähte (21, 22), die die ersten bzw. zweiten elektrischen Anschlüsse (301, 302) der weiteren elektronischen Steuereinheit (300) mit den zwei Referenzdrähten (11, 12) verbinden, und
- eine weitere Führungseinrichtung (24), die die zwei weiteren Referenzdrähte (21, 22) zwingt, mit dem weiteren Kommunikationsdraht (23) zu verlaufen.

6. Kommunikationsvorrichtung (20) nach dem vorhergehenden Anspruch, wobei die Verbindungen der zwei weiteren Referenzdrähte (21, 22) mit den zwei Referenzdrähten (11, 12) und die Verbindung des weiteren Kommunikationsdrahts (23) mit dem Kommunikationsdraht (13) durch drei Verspleißungen (31, 32, 33) hergestellt werden.

7. Kommunikationsvorrichtung (20) nach Anspruch 5, wobei die Verbindungen der zwei weiteren Referenzdrähte (21, 22) mit den zwei Referenzdrähten (11, 12) und die Verbindung des weiteren Kommunikationsdrahts (23) mit dem Kommunikationsdraht (13) durch dreipolige Steck-(34) und Buchsenverbinder (35) hergestellt werden.

8. Kommunikationsvorrichtung nach einem der Ansprüche 5 bis 7, wobei zwischen zwei und vierzehn weitere elektronische Steuereinheiten vorgesehen sind.

9. Kraftfahrzeug, **dadurch gekennzeichnet, dass** es eine Kommunikationsvorrichtung (10; 20) nach einem der Ansprüche 1 bis 8 aufweist.

10. Kraftfahrzeug nach Anspruch 9, das mindestens eine elektronische Steuereinheit (100) mit einem ersten elektrischen Anschluss (101) enthält, der mit einem elektrischen Verteilerkasten verbunden ist, der sich im Innenraum des Kraftfahrzeugs befindet und eine Versorgungsspannung (V_{SUPP}) abhängig von einer Batteriespannung (V_{BATT}) an die elektronische Einheit liefert, **dadurch gekennzeichnet, dass** es einen Massebolzen aufweist, der sich so nahe wie möglich der elektronischen Steuereinheit (100) befindet und mit dem ein zweiter Anschluss (102) der elektronischen Steuereinheit verbunden ist.

## Claims

1. Communication device (10; 20) including two electronic control units (100, 200) that each include a first electric terminal (101, 201), a second electric terminal (102, 202), and a communication terminal (103, 203) connected to the communication terminal (103, 203) of the other electronic control unit (100, 200) by a communication wire (13), in which:
- a first electronic control unit (100) of said two electronic control units comprises a power supply terminal (SUPP) supplied at a first supply voltage and connected to an electrical distribution unit to deliver on its first electric terminal (101) a first reference voltage level (V_{SUPP}), a ground terminal (GND) supplied at a first ground voltage and connected to a ground bolt situated as close as possible to the first unit to the first electronic control unit (100) so as to deliver on its second electric terminal (102) a second reference voltage level (V_{GND}), and a generation means (111) suitable for emitting a voltage signal (SLIN) referenced to said reference voltages (V_{SUPP}, V_{GND}) on its communication terminal (103), and
- a second electronic control unit (200) of said two electronic control units includes a means (211) for processing said voltage signal (SLIN) received on its communication terminal (203) via said communication wire (13),
- two reference wires (11, 12) connecting said first electric terminals (101, 201) to each other and said second electric terminals (102, 202) to each other, and
- a guide means (14) routes said reference wires (11, 12) with said communication wire (13) between said two electronic control units (100, 200),
**characterized in that**:
- the second electronic control unit (200) comprises a power supply terminal supplied at another supply voltage and a ground terminal supplied at another ground voltage, and **in that**
- the first electronic control unit (100) comprises disconnection means adapted to disconnect its first electric terminal from the first supply voltage and its second electric terminal from the first ground voltage when sending a voltage signal (SLIN) from the second electronic control unit (200) to the first electronic control unit (100), and **in that**
- the second electronic control unit (200) comprises disconnection means adapted to connect its first electric terminal to the other supply voltage and its second electric terminal to the other ground voltage when sending a voltage signal (SLIN) from the second electronic control unit (200) to the first electronic control unit (100).

2. Communication device (10; 20) according to the preceding claim, wherein said guide means (14) routes said reference wires (11, 12) and said communication wire (13) in a substantially parallel manner.

3. Communication device (10; 20) according to either one of the preceding claims, wherein said guide means (14) includes a cable sheath housing said reference wires (11, 12) and said communication wire (13).

4. Communication device (10; 20) according to one of the preceding claims, wherein said generation means (111) is provided to generate said voltage signal (SLIN) in accordance with an LIN-type communication protocol.

5. Communication device (20) according to one of the preceding claims, further including:
- another electronic control unit (300) that includes a first electric terminal (301) and a second electric terminal (302), a means (311) for processing said voltage signal (SLIN), and a communication terminal (303) connected to said communication wire (13) by another communication wire (23) to receive said voltage signal (SLIN),
- two other reference wires (21, 22) respectively connecting said first and second electric terminals (301, 302) of said other electronic control unit (300) to said two reference wires (11, 12), and
- another guide means (24) that routes said two other reference wires (21, 22) with said other communication wire (23).

6. Communication device (20) according to the preceding claim, wherein the connections of said two other reference wires (21, 22) with said two reference wires (11, 12) and the connection of said other communication wire (23) with said communication wire (13) are produced by three splices (31, 32, 33).

7. Communication device (20) according to Claim 5, wherein the connections of said two other reference wires (21, 22) with said two reference wires (11, 12) and the connection of said other communication wire (23) with said communication wire (13) are produced by a three-pin male connector (34) and a three-pin female connector (35) .

8. Communication device according to one of Claims 5 to 7, including between two and fourteen other electronic control units.

9. Motor vehicle **characterized in that** it includes a communication device (10; 20) according to one of Claims 1 to 8.

10. Motor vehicle according to Claim 9, comprising at least one electronic control unit (100) with a first electric terminal (101) connected to an electrical distribution unit situated in the passenger compartment of the motor vehicle and delivering a supply voltage (V_{SUPP}) that is a function of a battery voltage (V_{BATT}) to said electronic unit, **characterized in that** it comprises a ground bolt situated as close as possible to said electronic control unit (100) and to which a second terminal (102) of said electronic control unit is connected.
